# EUROPÄISCHE PATENTSCHRIFT

(11) **EP 3 692 686 B1**
(45) Veröffentlichungstag und Bekanntmachung des Hinweises auf die Patenterteilung: **21.06.2023**
(21) Anmeldenummer: 18773399.3
(22) Anmeldetag: 17.09.2018
(51) Int. Cl.: H04L 12/40, H04L 45/00, H04L 45/28, G05B 9/03

(54) **VERFAHREN ZUM BETREIBEN EINER ANLAGE DER AUTOMATISIERUNGSTECHNIK**
METHOD FOR OPERATING AN AUTOMATION TECHNOLOGY FACILITY
PROCÉDÉ DE FONCTIONNEMENT D'UNE INSTALLATION DE TECHNIQUE DE L'AUTOMATISATION

(30) Priorität: 06.10.2017 DE 102017123222
(43) Veröffentlichungstag der Anmeldung: 12.08.2020
(73) Patentinhaber: Endress+Hauser Process Solutions AG, 4153 Reinach (CH)
(72) Erfinder: MAYER, Michael, 4104 Oberwil (CH); MANEVAL, Michael, 79650 Schopfheim (DE); BÜTTNER, Karl, 79395 Neuenburg (DE); HAMANN, Dirk, 67071 Ludwigshafen (DE)
(74) Vertreter: Trenkle, Dennis
(86) Internationale Anmeldenummer: PCT/EP2018/075043
(87) Internationale Veröffentlichungsnummer: WO 2019/068451

(56) Entgegenhaltungen:
- DE-A1-102010 040 055
- DE-A1-102015 119 643
- US-A- 6 047 222

## Beschreibung

Die Erfindung betrifft ein Verfahren zum Betreiben einer Anlage der Automatisierungstechnik, in welcher zumindest ein Feldgerät eingesetzt ist.

Aus dem Stand der Technik sind bereits Feldgeräte bekannt geworden, die in industriellen Anlagen zum Einsatz kommen. In der Automatisierungstechnik ebenso wie in der Fertigungsautomatisierung werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Sensorsysteme. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktorsysteme verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus^{®}, Foundation^{®} Fieldbus, HART^{®}, etc.) mit übergeordneten Einheiten verbunden. Bei den übergeordneten Einheiten handelt es sich um Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt, die die Messwerte gegebenenfalls weiterverarbeiten und an den Leitstand der Anlage weiterleiten. Der Leitstand dient zur Prozessvisualisierung, Prozessüberwachung und Prozessteuerung über die übergeordneten Einheiten. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Sogenannte Plant-Asset-Management-Systeme greifen oftmals parallel zur Anlagensteuerung auf das Kommunikationsnetzwerk der Anlage zu. Auf dem Plant-Asset-Management-System sind Applikationen implementierbar. Diese Applikationen erlauben beispielsweise einen Übersicht auf den Zustand der Feldgeräte oder eine Konfigurationsmöglichkeit der Feldgeräte. Ein solches Plant-Asset-Management-System ist typischerweise in einer Bedieneinheit, beispielsweise in einem PC, in einem Laptop, in einer mobilen Bediengerät, bspw. ein mobiles Endgerät, etc., implementiert.

Die DE 10 2010 040055 A1 offenbart ein Prozessteuerungssystem, welches eine Leitwarte und mehrere Bediengeräte umfasst.

Zur Erhöhung der Sicherheit sind die Kommunikationsnetzwerke oftmals redundant ausgelegt. Ein solches Netzwerk besteht in der Regel aus zwei Strängen: Dem Hauptstrang und dem redundanten Ersatzstrang. Im Störungsfall wird seitens der Leitwarte von dem Hauptstrang auf den redundanten Ersatzstrang umgeschaltet, so dass eine zuverlässige Kommunikation mit den Feldgeräten selbst im Störfall des Hauptstrangs gewährleistet ist.

Als Beispiele hierfür dienen die die US 6 047 222 A und die DE 10 2015 119643 A1, in welchen solche Netzwerksysteme mit parallelen Strängen, bzw. redundaten Anbindungen zwischen Servern und Clients offenbart sind.

Ein solches Umschalten von dem Hauptstrang auf den Ersatzstrang wird von der parallel zur Anlagensteuerung auf das Kommunikationsnetzwerk zugreifende Asset-Management-System nicht erkannt, was zum Verbindungsabbruch führt. Im Falle, dass die Leitwarte auf ein anderes Kommunikationsnetzwerk umschaltet, ist werden nämlich auf dem bisherigen Kommunikationsnetzwerk keine Telegramme zwischen der Leitwarte und dem Feldgerät übermittelt, wodurch das Plant-Asset-Management-System keine Informationen mehr empfängt.

Ausgehend von dieser Problematik liegt der Erfindung die Aufgabe zugrunde, ein Verfahren vorzustellen, welches einen zuverlässigen Zugriff von einer Bedieneinheit auf ein Feldgerät über ein redundant ausgelegtes Kommunikationsnetzwerk ermöglicht.

Die Aufgabe wird durch ein Verfahren zum Betreiben einer Anlage der Automatisierungstechnik gelöst, in welcher Anlage zumindest ein Feldgerät eingesetzt ist,
wobei ein erstes und ein zweites Gateway vorgesehen sind, welche jeweils über eine erste Kommunikationsschnittstelle und eine zweite Kommunikationsschnittstelle verfügen,
wobei das erste Gateway mittels der ersten Kommunikationsschnittstelle über ein erstes Kommunikationsnetzwerk mit dem Feldgerät verbunden ist,
wobei das zweite Gateway mittels der ersten Kommunikationsschnittstelle über ein zweites, zum ersten Kommunikationsnetzwerk redundantes und parallel geschaltetes Kommunikationsnetzwerk mit dem Feldgerät verbunden ist,
wobei das erste und das zweite Gateway jeweils mittels der jeweiligen zweiten Kommunikationsschnittstelle mit einer Bedieneinheit zum Überwachen und/oder Bedienen des Feldgeräts verbunden sind,
wobei in der Bedieneinheit der Kommunikationszugriff auf das erste Gateways über einen ersten Treiber in der Bedieneinheit realisiert ist, und
wobei in der Bedieneinheit der Kommunikationszugriff auf das zweite Gateways über einen zweiten Treiber in der Bedieneinheit realisiert ist.

Erfindungsgemäß sind das erste Kommunikationsnetzwerk und das zweite Kommunikationsnetzwerk mit einer Leitwarte der Anlage verbunden,
wobei die Leitwarte entweder mit dem ersten Kommunikationsnetzwerk oder mit dem zweiten Kommunikationsnetzwerk eine Kommunikationsverbindung aufbaut und kommuniziert,
wobei die Leitwarte auf das entsprechend andere Kommunikationsnetzwerk umschaltet und mit diesem eine Kommunikationsverbindung aufbaut, falls ein Problem der vorherigen Kommunikationsverbindung detektiert wird,
   , und
wobei die Bedieneinheit ständig das erste und das zweite Kommunikationsnetzwerk analysiert und im Falle eines Umschaltens der Leitwarte auf das Gateway desjenigen Netzwerks umschaltet, welches sich aktiv in Kommunikationsverbindung mit der Leitwarte befindet.

Der Vorteil des erfindungsgemäßen Verfahrens besteht darin, dass stets ein Zugriff von der Bedieneinheit auf ein Feldgerät gewährleistet ist. Die Bedieneinheit ist dazu ausgestaltet, automatisch stets auf jenes Kommunikationsnetzwerk umzuschalten, über welches aktuell Telegramme zwischen der Leitwarte und dem Feldgerät übertragen werden. Auch in dem Falle, dass eine beispielhafte Störung des ersten Kommunikationsnetzwerks - welche das Umschalten der Leitwarte auf das zweite Kommunikationsnetzwerk veranlasst hat - behoben wird und die Leitwarte zurück auf das erste Kommunikationsnetzwerk schaltet, wird dieses erneute Umschalten von der Bedieneinheit registriert und auf das Gateway des ersten Kommunikationsnetzwerks zurückgeschaltet.

Im einleitenden Teil der Beschreibung wird ein Hauptstrang und ein Ersatzstrang eines Kommunikationsnetzwerks in einer Anlage der Prozessautomatisierung beschrieben. Im Sinne der vorliegenden Erfindung bezeichnet das erste Kommunikationsnetzwerk den Hauptstrang; das zweite Kommunikationsnetzwerk bezeichnet den Ersatzstrang.

Feldgeräte, welche im Zusammenhang mit dem erfindungsgemäßen Verfahren genannt sind, wurden bereits im einleitenden Teil der Beschreibung beispielhaft beschrieben.

Gemäß einer ersten Variante des erfindungsgemäßen Verfahrens ist vorgesehen, dass auf der Bedieneinheit eine Rahmenapplikation, insbesondere nach dem FDT-Standard, welche zur Kommunikation der Bedieneinheit mit den Gateways ausgestaltet ist, abläuft.

Gemäß einer zweiten Variante des erfindungsgemäßen Verfahrens ist vorgesehen, dass es sich bei der Bedieneinheit um einen OPC-Server handelt.

Neben diesen beiden genannten Varianten sind auch weitere Varianten denkbar, in denen die Bedieneinheit auf einer Rahmenapplikation/Gerätetreiber-Architektur basiert, beispielsweise FDI-Hosts.

Gemäß einer bevorzugten Ausgestaltung des erfindungsgemäßen Verfahrens ist vorgesehen, dass das Umschalten der Bedieneinheit derart erfolgt, dass der Treiber desjenigen Gateways aktiv geschaltet wird, welches mit dem Netzwerk verbunden ist, welches sich aktiv in Kommunikationsverbindung mit der Leitwarte befindet, wobei der jeweilige andere Treiber passiv geschaltet wird. Dem Bediener werden hierbei beide Gateways und beide dazugehörige Kommunikationsnetzwerke auf der Oberfläche der Rahmenapplikation visualisiert. Wird ein Treiber eines Gateways passiv geschaltet, so wird auch die Visualisierung des dazugehörigen Gateways und des an das Gateway angeschlossenen Kommunikationsnetzwerks deaktiviert - beispielsweise wird die Visualisierung ausgegraut, so dass eine Bedienung des Feldgeräts über dieses Kommunikationsnetzwerk für den Bediener nicht möglich ist.

Gemäß einer vorteilhaften Weiterbildung des erfindungsgemäßen Verfahrens ist vorgesehen, dass auf der Bedieneinheit ein gemeinsamer Treiber, insbesondere ein CommDTM oder ein GatewayDTM, implementiert wird, mittels welchem der Kommunikationszugriff von der Bedieneinheit auf die Gateways realisiert wird. Anstatt der bisherigen beiden Gerätetreiber wird nun lediglich ein gemeinsamer Gerätetreiber für beide Gateways verwendet. Dem Benutzer werden nun nicht zwei Gateways - samt dazu gehörigem Kommunikationsnetzwerk - angezeigt, sondern lediglich das aktuell aktive Kommunikationsnetzwerk.

Gemäß einer bevorzugten Ausgestaltung des erfindungsgemäßen Verfahrens ist vorgesehen, dass das Umschalten der Bedieneinheit derart erfolgt, dass im Treiber automatisch auf einen Zugriff auf das jeweilige Gateway umgestellt wird, welches mit dem Netzwerk verbunden ist, welches sich aktiv in Kommunikationsverbindung mit der Leitwarte befindet. Nach dem Umschalten wird in der Visualisierung automatisch das aktuell aktiv geschaltete Gateway angezeigt.

Gemäß einer vorteilhaften Ausgestaltung des erfindungsgemäßen Verfahrens ist vorgesehen, dass für das Detektieren des Umschaltens der Leitwarte die Gateways in einem Listener-Modus betrieben werden, in welchem die Gateways über das jeweilige Kommunikationsnetzwerk übermittelte Telegramme mithören, wobei im Falle eines Umschaltens der Leitwarte über das jeweilige inaktive Kommunikationsnetzwerk über einen vordefinierten Zeitraum keine Telegramme empfangen werden. Das jeweils betroffene Gateway meldet diesen Zustand der Bedieneinheit, welche daraufhin prüft, ob von dem anderen Gateway Telegramme mitgehört werden können. Ist dies der Fall, so wird auf das Gateway umgeschaltet, mittels welchem Telegramme erfolgreich mitgehört werden konnten.

Gemäß einer bevorzugten Ausgestaltung des erfindungsgemäßen Verfahrens ist vorgesehen, dass für das Detektieren des Umschaltens in regelmäßigen Zeitabständen eine Anfrage von den Gateways an die Leitwarte gesendet wird und wobei im Falle eines Verbindungsfehlers keine Antwort der Leitwarte über das jeweils inaktive Kommunikationsnetzwerk empfangen wird. Im Falle, dass ein Kommunikationsnetzwerk aktiv geschaltet ist, sendet die Leitwarte eine Antwort auf die Anfrage über dieses Kommunikationsnetzwerk. Das Gateway informiert die Bedieneinheit anschließend unmittelbar über das Ergebnis der Anfrage, also ob über ein jeweiliges Gateway eine Antwort auf eine Anfrage empfangen wurde. Alternativ kann eine Anfrage der Gateways auch durch den Bediener über die Bedieneinheit initiiert werden.

Die Erfindung wird anhand der nachfolgenden Figuren näher erläutert. Es zeigen
Fig. 1: ein Ausführungsbeispiel des erfindungsgemäßen Verfahrens; und
Fig. 2: eine Darstellungsform der Kommunikationsnetzwerke in einer FDT-Rahmenapplikation.

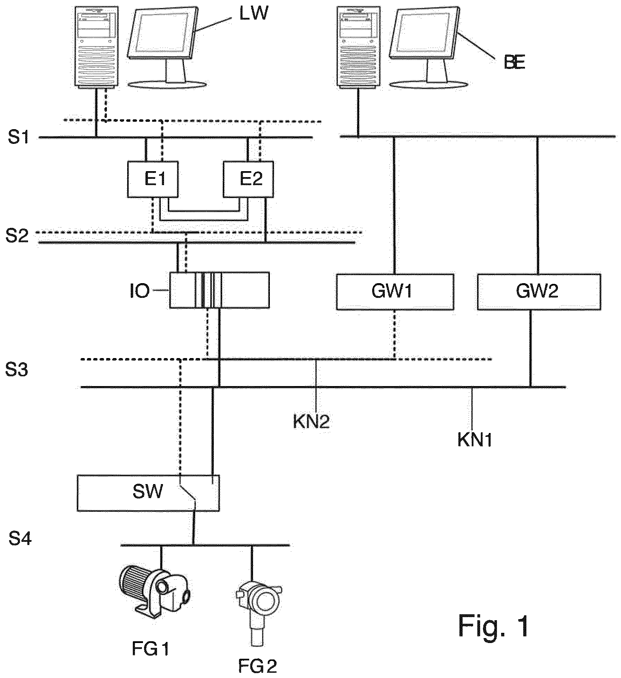

Fig. 1 zeigt ein Ausführungsbeispiel des erfindungsgemäßen Verfahrens. Hierbei ist eine Anlage der Prozessautomatisierung abgebildet. In der Anlage sind zwei Feldgeräte FG1, FG2 eingesetzt. Diese dienen zum Ermitteln einer Prozessgröße, beispielsweise einem Füllstand, einer Durchflussgeschwindigkeit, einem Prozessdruck, etc.

Die Feldgeräte sind über ein erstes Kommunikationsnetzwerk KN1 miteinander und mit einem Workstation-PC der Leitwarte verbunden. Das erste Kommunikationsnetzwerk besteht aus mehreren Teilsegmenten. In Segment S1 ist der Workstation-PC mit einer übergeordneten Steuerungseinheit E1, beispielsweise einer SPS, verbunden. Bei dem Segment S1 des ersten Kommunikationsnetzwerks KN1 handelt es sich beispielsweise um ein Ethernet-Netzwerk oder um einen industriellen Feldbus, beispielsweise Profibus DP.

In Segment S2 des ersten Kommunikationsnetzwerks KN1 ist die übergeordnete Steuerungseinheit E1 mit einer Remote-I/O IO verbunden. Wiederum handelt es sich bei dem im Segment S2 vorliegenden Typ des ersten Kommunikationsnetzwerks KN1 um ein Ethernet-Netzwerk oder um einen industriellen Feldbus.

Die Remote-I/O ist mittels des dritten Segments S3 und vierten Segment S4 des ersten Kommunikationsnetzwerks mit den Feldgeräten FG1, FG2 verbunden. Typischerweise handelt es sich bei dem im Segment S2 vorliegenden Typ des ersten Kommunikationsnetzwerks KN1 um einen Feldbus oder um eine 4-20 mA-Stromschleife.

Um stets eine fehlerfreie Kommunikation zwischen dem Workstation-PC der Leitwarte LW und den Feldgeräten FG1, FG2 zu gewährleisten, ist das erste Kommunikationsnetzwerk KN1 zumindest teilweise redundant ausgelegt. In den Segmenten S1, S2 und S3 ist ein zweites Kommunikationsnetzwerk KN2 vorgesehen, welches parallel zu dem ersten Kommunikationsnetzwerk KN1 geschaltet ist. Es ist hierbei vorgesehen, eine eigene Steuerungseinheit E2 vorzusehen, welche zwischen dem ersten Segment S1 und dem zweiten Segment S2 des zweiten Kommunikationsnetzwerks angeordnet ist.

Normalerweise wird für die Kommunikation zwischen dem Workstation-PC der Leitwarte LW und den Feldgeräten FG1, FG2 das erste Kommunikationsnetzwerk KN1 eingesetzt, während das zweite Kommunikationsnetzwerk KN2 deaktiviert ist. Detektiert die Leitwarte jedoch einen Kommunikationsfehler, also empfängt beispielsweise keine Telegramme der Feldgeräte FG1, FG2 über das erste Kommunikationsnetzwerk KN1, so schaltet diese auf eine Kommunikation über das zweite Kommunikationsnetzwerk KN2 um. Hierfür ist ein Schalter vorgesehen, welcher sich zwischen Segment S3 und Segment S4 befindet. Dieser verbindet das gemeinsame Kommunikationsnetzwerk in Segment S4 mit den in Segmenten S1 bis S3 befindlichen Kommunikationsnetzwerken KN1, KN2. Es kann alternativ vorgesehen sein, dass sich das Schalterelement direkt im Workstation-PC der Leitwarte LW befindet und dass das erste Kommunikationsnetzwerk KN1 komplett redundant ausgestaltet ist, so dass sich auch im Abschnitt S4 das zweite Kommunikationsnetzwerk KN2 befindet.

Des Weiteren ist in der Anlage eine Bedieneinheit BE vorgesehen. In dieser ist ein Plant-Asset-Management-System vorgesehen, zum Konfigurieren und/oder Überwachen der Feldgeräte FG1, FG2. Mittels eines ersten Gateways GW1 ist die Bedieneinheit BE mit dem ersten Kommunikationsnetzwerk verbunden. Damit auch dann mit den Feldgeräten FG1, FG2 kommuniziert werden kann, wenn die Leitwarte auf das zweite Kommunikationsnetzwerk KN2 umgeschaltet hat, ist die Bedieneinheit BE zusätzlich mittels eines zweiten Gateways GW2 mit dem zweiten Kommunikationsnetzwerk KN2 verbunden. Um das richtige Kommunikationsnetzwerk KN1, KN2 zu nutzen, detektieren die Gateways GW1, GW2 den Netzwerkverkehr auf den beiden Kommunikationsnetzwerken KN1, KN2 und geben eine Rückmeldung an die Bedieneinheit, ob Telegramme auf diesen Kommunikationsnetzwerken mitgehört werden können. Im Falle, dass die Leitwarte LW auf das zweite Kommunikationsnetzwerk KN2 umschaltet, können auf über das erste Kommunikationsnetzwerk KN1 keine Telegramme mehr mitgehört werden. Dies wird der Bedieneinheit mitgeteilt, welche durch Umkonfigurieren ebenfalls ein Umschalten vornimmt.

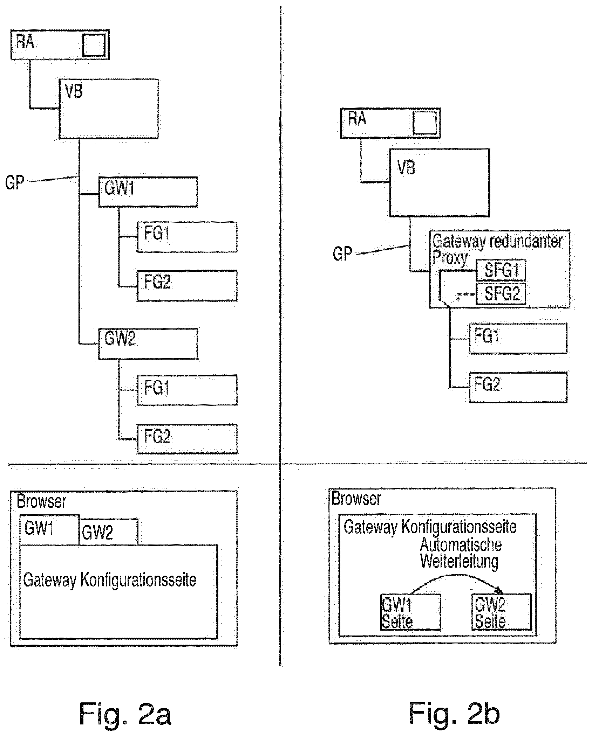

Hierfür stehen zwei Möglichkeiten zur Verfügung, welche unter Zuhilfenahme von Fig. 2 erläutert werden:
Fig. 2 zeigt eine Darstellungsform der Kommunikationsnetzwerke in einer FDT-Rahmenapplikation RA. Die FDT-Rahmenapplikation RA ist in der Bedieneinheit BE implementiert und dient dem Ansteuern der Feldgeräte FG1, FG2, sowie zum Darstellen von Informationen von den Feldgeräten FG1, FG2 und über die Feldgeräte FG1, FG2. Hierfür müssen sowohl für die Feldgeräte FG1, FG2, als auch für die Gateways GW1, GW2 Treiber auf der Bedieneinheit BE vorgesehen sein, welche in die Rahmenapplikation geladen werden. Die Treiber sorgen dafür, dass Befehle an die jeweiligen Komponenten FG1, FG2, GW1, GW2 korrekt codiert werden, bzw. von den Komponenten FG1, FG2, GW1, GW2 empfangene Befehle korrekt interpretiert werden.

Die erste Variante, in Fig. 2a abgebildet, besteht darin, dass für jedes der Gateways GW1, GW2 ein eigener Gerätetreiber vorgesehen ist. Fig. 2a, oben zeigt einen Gerätepfad GP, welcher einem Bediener auf der Bedieneinheit BE über die Rahmenapplikation angezeigt wird. Die Rahmenapplikation RA enthält einen Verwaltungsbaustein VB, welcher das Umschalten zwischen den Kommunikationsnetzwerken KN1, KN2 durch die Leitwarte detektiert und ein Umkonfigurieren der Bedieneinheit BE vornimmt.

Eine Ebene unterhalb dieses Verwaltungsbausteins VB befinden sich die einzelnen Gateways GW1, GW2, für die beide ein gemeinsamer Gerätetreiber vorgesehen ist. Eine Ebene unterhalb der Gateways befinden die sich am jeweiligen Gateway GW1, GW2 angeschlossenen Feldgeräte FG1, FG2.

Durch Auswählen eines der beiden Gateways GW1, GW2 öffnet sich im Browser der Bedieneinheit BE eine gerätespezifische Seite ("Gateway Konfigurationsseite"), in Fig. 2a unten abgebildet, die Einstellungsmöglichkeiten, bzw. Bedienmöglichkeiten des jeweiligen Gateways GW1, GW2 bietet. Jedes Gateway GW1, GW2 besitzt hier eine eigene Seite, wie über die in Fig. 2a unten abgebildeten Reiter ersichtlich. Durch Auswahl eines der Feldgeräte FG1, FG2 aus dem Verwaltungsbaum kann auch für dieses eine gerätespezifische Seite im Browser geöffnet werden, über welche Informationen über das Feldgerät FG1, FG2 angezeigt werden und das Feldgerät u.U. auch bedient werden kann.

Da in dem normalen Betriebszustand eine Kommunikation zwischen der Leitwarte und den Feldgeräten FG1, FG2 lediglich über das erste Kommunikationsnetzwerk erfolgt, ist der Treiber des ersten Gateways aktiviert, während der Treiber des zweiten Gateways deaktiviert ist. Die Feldgeräte, welche sich im Gerätepfad unterhalb des zweiten Gerätepfads befinden sind daher ausgegraut und können durch einen Bediener nicht ausgewählt werden.

In dieser ersten Variante ist es vorgesehen, dass die Bedieneinheit BE durch die durch die Gateways GW1, GW2 gemeldete Detektion des Umschaltens der Leitwarte auf eine Kommunikation über das zweite Kommunikationsnetzwerk KN2 eine Umkonfiguration vornimmt. In diesem Fall wird der Gerätetreiber des ersten Gateways GW1 deaktiviert, während der Gerätetreiber des zweiten Gateways deaktiviert wird. Dementsprechend sind im Gerätepfad die Feldgeräte FG1, FG2 unterhalb des ersten Gateways GW1 ausgegraut und nicht auswählbar, während diese nun im Gerätepfad unterhalb des zweiten Gateways GW2 verfügbar sind.

Nachteilig kann an dieser ersten Variante gesehen werden, dass zwei separate Gerätetreiber vonnöten sind. Somit werden im Gerätepfad GP zwei Instanzen der Feldgeräte FG1, FG2 visualisiert.

Die erste Variante, in Fig. 2b abgebildet, besteht darin, dass auf der Bedieneinheit ein gemeinsamer Treiber, insbesondere ein CommDTM oder ein GatewayDTM, für die Gateways GW1, GW2 implementiert wird, mittels welchem der Kommunikationszugriff von der Bedieneinheit BE auf die Gateways GW1, GW2 realisiert wird. Im Gerätepfad GP, gezeigt in Fig. 2b oben, wird nun anstatt beider Gateways GW1, GW2 eine gemeinsame Instanz ("Gateway redundanter Proxy") visualisiert, unter welcher sich nur noch jeweils lediglich eine Instanz der Feldgeräte FG1, FG2 befindet. Im normalen Betriebszustand ist vorgesehen, dass der Treiber derart konfiguriert ist, dass auf das erste Gateway GW1 zugegriffen wird. Bei der Detektion eines Umschaltens von der Leitwarte auf das zweite Kommunikationsnetzwerk KN2 wird der gemeinsame Treiber derart umkonfiguriert, dass dieser zur Kommunikation mit dem zweiten Gateway ausgestaltet ist. Der Gerätepfad ändert sich hierdurch nicht.

Außerdem existiert lediglich noch eine gerätespezifische Seite für die Gateways GW1, GW2, gezeigt in Fig. 2b unten, welche sich automatisch auf das Gateway GW1, GW2 bezieht, welches mit dem aktuell aktiven Kommunikationsnetzwerk KN1, KN2 verbunden ist.

Mittels des erfindungsgemäßen Verfahrens ist stets sichergestellt, dass die Bedieneinheit BE auf die Feldgeräte FG1, FG2 zugreifen kann, bzw. Informationen der Feldgeräte FG1, FG2 enthält, selbst wenn die Leitwarte die Kommunikation mit den Feldgeräten FG1, FG2 aufgrund eines Kommunikationsfehlers auf ein anderes Kommunikationsnetzwerk KN1, KN2 umstellt.

Neben der Anwendung einer FDT-Rahmenapplikation auf der Bedieneinheit BE können selbstverständlich auch andere Systeme, beispielsweise, aber nicht einschränkend, OPC-Server oder FDI-Hosts im Rahmen des erfindungsgemäßen Verfahrens verwendet werden.

### Bezugszeichenliste

- BE: Bedieneinheit
- E1, E2: übergeordnete Steuereinheit
- FG1, FG2: Feldgeräte
- GP: Gerätepfad
- GW1, GW2: Gateways
- IO: Remote-I/O
- KN1: erstes Kommunikationsnetzwerk
- KN2: redundantes zweites Kommunikationsnetzwerk
- LW: Leitwarte
- RA: Rahmenapplikation
- S1, S2, S3, S4: Segmente der Kommunikationsnetzwerke
- SW: Schalter
- VB: Verwaltungsbaustein

## Patentansprüche

1. Verfahren zum Betreiben einer Anlage der Automatisierungstechnik, in welcher zumindest ein Feldgerät (FG1, FG2) eingesetzt ist,
wobei ein erstes und ein zweites Gateway (GW1, GW2) vorgesehen sind, welche jeweils über eine erste Kommunikationsschnittstelle und eine zweite Kommunikationsschnittstelle verfügen, wobei das erste Gateway (GW1) mittels der ersten Kommunikationsschnittstelle über ein erstes Kommunikationsnetzwerk (KN1) mit dem Feldgerät (FG1, FG2) verbunden ist,
wobei das zweite Gateway (GW2) mittels der ersten Kommunikationsschnittstelle über ein zweites, zum ersten Kommunikationsnetzwerk (KN1) redundantes und parallel geschaltetes Kommunikationsnetzwerk (KN2) mit dem Feldgerät (FG1, FG2) verbunden ist,
wobei das erste und das zweite Gateway (GW2) jeweils mittels der jeweiligen zweiten Kommunikationsschnittstelle mit einer Bedieneinheit (BE) zum Überwachen und/oder Bedienen des Feldgeräts (FG1, FG2) verbunden sind,
wobei in der Bedieneinheit (BE) der Kommunikationszugriff auf das erste Gateway (GW1) über einen ersten Treiber in der Bedieneinheit (BE) realisiert ist, und
wobei in der Bedieneinheit (BE) der Kommunikationszugriff auf das zweite Gateway (GW2) über einen zweiten Treiber in der Bedieneinheit (BE) realisiert ist,
**dadurch gekennzeichnet,**
**dass** das erste Kommunikationsnetzwerk (KN2) und das zweite Kommunikationsnetzwerk (KN2) mit einer Leitwarte (LW) der Anlage verbunden sind,
**dass** die Leitwarte (LW) entweder mit dem ersten Kommunikationsnetzwerk (KN1) oder mit dem zweiten Kommunikationsnetzwerk (KN2) eine Kommunikationsverbindung aufbaut und kommuniziert,
**dass** die Leitwarte (LW) auf das entsprechend andere Kommunikationsnetzwerk (KN1, KN2) umschaltet und mit diesem eine Kommunikationsverbindung aufbaut, falls ein Problem der vorherigen Kommunikationsverbindung detektiert wird,
und
**dass** die Bedieneinheit (BE) ständig das erste und das zweite Kommunikationsnetzwerk (KN1, KN2) analysiert und im Falle eines Umschaltens der Leitwarte (LW) auf das Gateway (GW1, GW2) desjenigen Netzwerks umschaltet, welches sich aktiv in Kommunikationsverbindung mit der Leitwarte (LW) befindet.

2. Verfahren nach Anspruch 1, wobei auf der Bedieneinheit (BE) eine Rahmenapplikation, insbesondere nach dem FDT-Standard, welche zur Kommunikation der Bedieneinheit (BE) mit den Gateways (GW1, GW2) ausgestaltet ist, abläuft.

3. Verfahren nach Anspruch 1, wobei es sich bei der Bedieneinheit um einen OPC-Server handelt.

4. Verfahren nach zumindest einem der vorherigen Ansprüche, wobei das Umschalten der Bedieneinheit (BE) derart erfolgt, dass der Treiber desjenigen Gateways (GW1, GW2) aktiv geschaltet wird, welches mit dem Kommunikationsnetzwerk (KN1, KN2) verbunden ist, welches sich aktiv in Kommunikationsverbindung mit der Leitwarte (LW) befindet, wobei der jeweilige andere Treiber passiv geschaltet wird.

5. Verfahren nach Anspruch 1, 2 oder 3, wobei auf der Bedieneinheit (BE) ein gemeinsamer Treiber implementiert wird, mittels welchem der Kommunikationszugriff von der Bedieneinheit (BE) auf die Gateways (GW1, GW2) realisiert wird.

6. Verfahren nach Anspruch 5, wobei das Umschalten der Bedieneinheit (BE) derart erfolgt, dass im Treiber automatisch auf einen Zugriff auf das jeweilige Gateway (GW1, GW2) umgestellt wird, welches mit dem Kommunikationsnetzwerk (KN1, KN2) verbunden ist, welches sich aktiv in Kommunikationsverbindung mit der Leitwarte (LW) befindet,.

7. Verfahren nach zumindest einem der vorherigen Ansprüche, wobei für das Detektieren des Umschaltens der Leitwarte (LW) die Gateways (GW1, GW2) in einem Listener-Modus betrieben werden, in welchem die Gateways (GW1, GW2) über das jeweilige Kommunikationsnetzwerk (KN1, KN2) übermittelte Telegramme mithören, wobei im Falle eines Umschaltens der Leitwarte (LW) über das jeweilige inaktive Kommunikationsnetzwerk (KN1, KN2) über einen vordefinierten Zeitraum keine Telegramme empfangen werden.

8. Verfahren nach zumindest einem der vorherigen Ansprüche, wobei für das Detektieren des Umschaltens in regelmäßigen Zeitabständen eine Anfrage von den Gateways (GW1, GW2) an die Leitwarte (LW) gesendet wird und wobei im Falle eines Verbindungsfehlers keine Antwort der Leitwarte (LW) über das jeweils inaktive Kommunikationsnetzwerk (KN1, KN2) empfangen wird.

## Claims

1. Procedure designed to operate a system used in automation engineering in which at least one field device (FG1, FG2) is used,
wherein a first and a second gateway (GW1, GW2) are provided, wherein said gateways each have a first communication interface and a second communication interface,
wherein the first gateway (GW1) is connected to the field device (FG1, FG2) by means of the first communication interface via a first communication network (KN1),
wherein the second gateway (GW2) is connected to the field device (FG1, FG2) by means of the first communication interface via a second communication network (KN2), which is redundant in relation to the first communication network, and connected in parallel with the first communication network (KN1)
wherein the first and the second gateway (GW2) are each connected by means of the second communication interface to an operating unit (BE) for monitoring and/or operating the field device (FG1, FG2),
wherein communication access to the first gateway (GW1) is implemented in the operating unit (BE) via a first driver in the operating unit (BE), and
wherein communication access to the second gateway (GW2) is implemented in the operating unit (BE) via a second driver in the operating unit (BE),
**characterized in that**
the first communication network (KN1) and the second communication network (KN2) are connected to a control station (LW) of the system,
the control station (LW) establishes a communication connection either with the first communication network (KN1) or with the second communication network (KN2) and communicates,
the control station (LW) switches to the other communication network (KN1, KN2) and establishes a communication connection with it if a problem with the previous communication connection is detected, and
the operating unit (BE) constantly analyzes the first and the second communication network (KN1, KN2) and, if the control station (LW) switches, the switch is to the gateway (GW1, GW2) of the network that has an active communication connection with the control station (LW).

2. Procedure as claimed in Claim 1, wherein a framework application runs on the operating unit (BE), particularly according to the FDT standard, which is designed for the communication of the operating unit (BE) with the gateways (GW1, GW2).

3. Procedure as claimed in Claim 1, wherein the operating unit is an OPC server.

4. Procedure according to one of the previous claims, wherein the operating unit (BE) is switched in such a way that the driver of the gateway (GW1, GW2) that is connected to the communication network (KN1, KN2), which has an active communication connection with the control station (LW), is switched in an active manner, wherein the other respective driver is switched in a passive manner.

5. Procedure as claimed in Claim 1, 2 or 3, wherein a common driver is implemented on the operating unit (BE) by means of which communication access from the operating unit (BE) to the gateways (GW1, GW2) is implemented.

6. Procedure as claimed in Claim 5, wherein the operating unit (BE) is switched in such a way that, in the driver, there is an automatic switch to an access to the respective gateway (GW1, GW2) that is connected to the communication network (KN1, KN2) that has an active communication connection with the control station (LW).

7. Procedure according to at least one of the previous claims, wherein, to detect the switching of the control station (LW), the gateways (GW1, GW2) are operated in a listener mode in which the gateways (GW1, GW2) listen to telegrams transmitted via the respective communication network (KN1, KN2), wherein if the control station (LW) switches no telegram is received via the respective inactive communication network (KN1, KN2) over a predefined period.

8. Procedure according to at least one of the previous claims, wherein, to detect the switching, a request is sent from the gateways (GW1, GW2) to the control station (LW) at regular intervals and
wherein, in the event of a connection error, no response from the control station (LW) is received via the respective inactive communication network (KN1, KN2).

## Revendications

1. Procédé destiné à l'exploitation d'une installation de la technique d'automatisation, installation dans laquelle est utilisé au moins un appareil de terrain (FG1, FG2),
une première et une deuxième passerelle (GW1, GW2) étant prévues, lesquelles passerelles disposent respectivement d'une première interface de communication et d'une deuxième interface de communication,
la première passerelle (GW1) étant reliée à l'appareil de terrain (FG1, FG2) au moyen de la première interface de communication par l'intermédiaire d'un premier réseau de communication (KN1),
la deuxième passerelle (GW2) étant reliée à l'appareil de terrain (FG1, FG2) au moyen de la première interface de communication par l'intermédiaire d'un deuxième réseau de communication (KN2) redondant et couplé en parallèle avec le premier réseau de communication (KN1)
la première et la deuxième passerelle (GW2) étant reliées respectivement au moyen de la deuxième interface de communication respective à une unité de commande (BE) pour surveiller et/ou commander l'appareil de terrain (FG1, FG2), l'accès de communication à la première passerelle (GW1) étant réalisé dans l'unité de commande (BE) par l'intermédiaire d'un premier pilote dans l'unité de commande (BE), et
l'accès de communication à la deuxième passerelle (GW2) étant réalisé dans l'unité de commande (BE) par l'intermédiaire d'un deuxième pilote dans l'unité de commande (BE),
**caractérisé**
**en ce que** le premier réseau de communication (KN1) et le deuxième réseau de communication (KN2) sont reliés à un salle de contrôle (LW) de l'installation,
**en ce que** la salle de contrôle (LW) établit et communique une liaison de communication soit avec le premier réseau de communication (KN1) soit avec le deuxième réseau de communication (KN2),
**en ce que** la salle de contrôle (LW) commute sur l'autre réseau de communication (KN1, KN2) correspondant et établit une liaison de communication avec celui-ci si un problème de la liaison de communication précédente est détecté, et
**en ce que** l'unité de commande (BE) analyse en permanence le premier et le deuxième réseau de communication (KN1, KN2) et, en cas de commutation de la salle de contrôle (LW), commute sur la passerelle (GW1, GW2) du réseau qui se trouve activement en liaison de communication avec la salle de contrôle (LW).

2. Procédé selon la revendication 1, pour lequel une application cadre, notamment selon le standard FDT, laquelle application est conçue pour la communication de l'unité de commande (BE) avec les passerelles (GW1, GW2), se déroule sur l'unité de commande (BE).

3. Procédé selon la revendication 1, pour lequel l'unité de commande est un serveur OPC.

4. Procédé selon l'une des revendications précédentes, pour lequel la commutation de l'unité de commande (BE) s'effectue de telle sorte que le pilote de la passerelle (GW1, GW2) qui est reliée au réseau de communication (KN1, KN2), réseau qui se trouve activement en liaison de communication avec la salle de contrôle (LW), est commuté de manière active, l'autre pilote respectif étant commuté de manière passive.

5. Procédé selon la revendication 1, 2 ou 3, pour lequel un pilote commun est mis en oeuvre sur l'unité de commande (BE), pilote au moyen duquel l'accès de communication de l'unité de commande (BE) aux passerelles (GW1, GW2) est réalisé.

6. Procédé selon la revendication 5, pour lequel la commutation de l'unité de commande (BE) s'effectue de telle sorte que, dans le pilote, on passe automatiquement à un accès à la passerelle (GW1, GW2) respective, qui est reliée au réseau de communication (KN1, KN2), lequel réseau se trouve activement en liaison de communication avec la salle de contrôle (LW).

7. Procédé selon l'une des revendications précédentes, pour lequel, pour la détection de la commutation de la salle de contrôle (LW), les passerelles (GW1, GW2) sont exploitées dans un mode d'écoute dans lequel les passerelles (GW1, GW2) écoutent des télégrammes transmis par l'intermédiaire du réseau de communication respectif (KN1, KN2), aucun télégramme n'étant reçu pendant une période prédéfinie dans le cas d'une commutation de la salle de contrôle (LW) par l'intermédiaire du réseau de communication (KN1, KN2) respectivement inactif.

8. Procédé selon l'une des revendications précédentes, pour lequel, pour la détection de la commutation, une demande est envoyée à intervalles réguliers par les passerelles (GW1, GW2) à la salle de contrôle (LW) et
pour lequel, en cas d'erreur de liaison, aucune réponse de la salle de contrôle (LW) n'est reçue par l'intermédiaire du réseau de communication (KN1, KN2) respectivement inactif.
